## Europäisches Patentamt

## European Patent Office

## Office européen des brevets

(11) Veröffentlichungsnummer: **0 090 403**
**B1**

(12) # EUROPÄISCHE PATENTSCHRIFT

(45) Veröffentlichungstag der Patentschrift:
**26.07.89**

(51) Int. Cl.⁴: **C 03 C 17/36, E 06 B 3/66**

(21) Anmeldenummer: **83103077.0**

(22) Anmeldetag: **28.03.83**

(54) Hochtransparenter, in Durch- und in Aussenansicht neutral wirkender, wärmedämmender Belag für ein Substrat aus transparentem Material.

(30) Priorität: **30.03.82 DE 3211753**

(43) Veröffentlichungstag der Anmeldung:
**05.10.83 Patentblatt 83/40**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
**EP-A- 0 024 925**
**EP-A- 0 076 975**
**FR-A- 1 124 472**
**FR-A- 1 513 724**

(73) Patentinhaber: **INTERPANE Entwicklungs- und Beratungsgesellschaft mbH & Co. KG,
Sohnreystrasse 21, D-3471 Lauenförde/Weser (DE)**

(72) Erfinder: **Gläser, Hans Joachim, Dr., Schöne Aussicht 9, D-3472 Beverungen 2 (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

### Beschreibung

Die Erfindung betrifft einen hochtransparenten in Durch- als auch in Außenansicht neutralen, wärmedämmenden Belag für ein Substrat aus transparentem Material gemäß dem Oberbegriff des Anspruchs 1 sowie ein Verfahren zu seiner Herstellung und eine Sonnen- und Wärmeschutz-Isolierscheibe mit einem solchen wärmedämmenden Belag.

Bei dem Belag handelt es sich um ein dünnes Mehrschichtsystem mit der Schichtenfolge Wismutoxid-Silber-Wismutoxid. Ein derartiges Wismutoxid-Silber-Wismutoxid bildet bei geeigneten Schichtdicken einen ausgezeichneten wärmedämmenden Belag auf transparenten Substraten wie Glas und Kunststoff (vgl. Zeitschrift Glass Technology, Bd. 21, Nr. 5 (Oktober 1980) S. 254, sowie deutsche Patentanmeldung P 2 854 213). Diese Wismutoxidschichten wirken in dem Schichtensystem als Entspiegelungsschichten für die Silberschicht, d.h., daß mit ihnen die Transmission der Silberschicht, insbesondere im sichtbaren Bereich erheblich erhöht wird. Außerdem wirken diese Schichten noch als Schutzschichten zur Vermeidung der Korrosion der Silberschicht.

Der Belag zeichnet sich also neben hoher Wärmedämmwirkung (niedriges Emissionsvermögen) durch hohe Transparenz für Sonnenstrahlen aus, wobei es sich weiter durch konventionelle Dioden-Kathodenzerstäubung mit hoher Farbgleichmäßigkeit wirtschaftlich niederschlagen läßt.

Es ist bei der Herstellung von Isolierglasscheiben heute üblich, die gewünschten wärmedämmenden Beläge auf großflächige Glasscheiben aufzubringen, wobei diese Glasscheiben nach der Beschichtung auf das jeweilige Fenstermaß zugeschnitten werden. Beläge mit Wismutoxid sind für die Weiterverarbeitung zu Isolierglas sehr vorteilhaft, weil sie von den Scheibenrändern mit einem einfachen Flammreduktionsprozeß entfernt werden können, so daß eine einwandfreie Verklebung der Isolierscheibe am Scheibenrand mit den herkömmlichen Isolierglasklebern, die auf Haftung mit Glasoberflächen eingestellt sind, möglich ist. Nach der Entfernung des wärmedämmenden Belages von dem Scheibenrand können die im übrigen beschichteten Scheiben mit den zur Zeit angewendeten Fertigungsmaschinen in gleicher Weise wie unbeschichtete Fensterglasscheiben zu Isolierglas weiterverarbeitet werden.

Es ist jedoch bekannt, daß das Wismutoxid-Silber-Wismutoxid-Schichtensystem nicht beständig gegen ultraviolette Strahlung der Sonne (UV-Bestrahlung) ist. Es kommt bei UV-Bestrahlung also zur Schwärzung der Schicht, d.h. zu einem Transparenzverlust für Sonnenstrahlung und zu einer Verminderung der Wärmedämmwirkung.

Zur Überwindung dieses Problems wurde bereits vorgeschlagen diese Schwärzung durch eine vorzugsweise etwa 4 nm dicke Zwischenschicht aus Blei- Antimon- oder Telluroxid, jeweils zwischen Silber- und Wismutoxidschicht aufgebracht, zu vermeiden (vgl. Patentanmeldung P 3 130 857.0 vom 4.8.1981). Das Aufbringen solcher Zwischenschichten ist zwar mittels der konventionellen Dioden- Kathodenzerstäubung möglich, jedoch ist die Aufbringung solcher Zwischenschichten wegen des zusätzlichen Beschichtungsaufwandes relativ kostspielig.

Aus der nicht vorveröffentlichten EP-A-0 076 975 ist ein hochtransparenter wärmedämmender Belag für ein Substrat aus transparentem Material bekannt, wobei der Belag aus einem Wismutoxid-Silber-Wismutoxid-Mehrschichtensystem aufgebaut ist. Die Wismutoxidschichten bestehen aus Wismutoxid und wenigstens einem weiteren Oxid der Metalle Zinn, Blei, Indium, Zink, Titan, Tantal, Cer und Antimon. Gemäß dem zweiten Ausführungsbeispiel der EP-A-0 076 975 ist wesentlich, daß beiderseits der Silberschicht eine Mischoxidschicht vorgesehen ist, die mindestens Wismutoxid und ein weiteres Metalloxid enthält, wobei der Wismutoxidanteil 50 Gew.-% nicht überschreiten soll und ferner die Zumischung ebenfalls ein Metalloxid ist. Die EP-A-0 076 975 geht von der Erkenntnis aus, daß reine Wismutoxidschichten in direktem Kontakt mit Silberschichten bei UV-Strahlung eine Schwärzung verursachen. Um diese Schwärzung zu vermeiden, sind nämlich gemäß dem ersten Ausführungsbeispiel der EP-A-0 076 975 der Silberschicht Metalloxidschichten benachbart, die bei UV-Bestrahlung keine Schwärzung verursachen, nämlich Metalloxidschichten, die keine Wismutoxidschichten sind.

Aus der FR-A-1 513 724 ist ein hochtransparenter und wärmedämmender Belag für ein Substrat aus transparentem Material bekannt. Dieser Belag besteht aus einer Metallschicht aus Gold, Kupfer oder Silber und jeweils eine dielektrischen Schutzschicht auf beiden Seiten der Metallschicht.

Die dünnen und transparenten dielektrischen Schichten bestehen aus wenigstens einem Stoff der folgenden Gruppe: $ZnS$, $Bi_2O_3$, $Fe_2O_3$, $TiO_2$, $CdS$, $CeO_2$, $CdO$, $PbO$, $SnO_2$, $SiO$, $Sb_2O_3$, $ZrO_2$ und $Ta_2O_5$ und sind gleichartig. In allen Ausführungsbeispielen besteht der auf eine Glasscheibe aufgebrachte Belag aus einer Goldschicht und zwei Wismutoxidschichten.

In der FR-A-1 513 724 wird jedoch nicht auf das sehr wesentliche Kriterium der UV-Stabilität Bezug genommen.

Aus der EP-A-0 024 925 ist ebenfalls ein hochtransparenter wärmedämmender Belag für ein Substrat aus transparentem Material bekannt. Dieser Belag besteht aus einem Wismutoxid-Silber-Wismutoxid-Mehrschichtensystem. Neben Silber enthält die Metallschicht kleine Mengen an Gold und Kupfer. Dieses Mehrschichtensystem soll verbesserte Eigenschaften, wie verbesserte Lichtunempfindlichkeit, Wärmebeständigkeit, Widerstandsfähigkeit gegenüber Schadgasen und Chemikalien aufweisen.

Es ist daher Aufgabe der Erfindung einen wärmedämmenden Belag anzugeben, der auf dem System Wismutoxid-Silber-Wismutoxid basiert, jedoch nicht eine allmählich fortschreitende Schwärzung bei Lichteinstrahlung aufweist und bei dem möglichst wenig Schichten kostengünstig mit konventioneller Dioden-Kathodenzerstäubung aufgebracht werden können.

Die Aufgabe wird erfindungsgemäß dadurch gelöst, daß den Wismutoxidschichten (1, 5) mindestens ein Stoff mit höherem Normalpotential zur Vermeidung der Schwärzung bei UV-Bestrahlung beigemischt ist, der aus der Gruppe Indium, Eisen, Nickel, Zink, Mangan, Magnesium, Titan, Kadmium und Zirkon ausgewählt ist und dessen Anteil von 0,2 bis 10 Gew.% des Gesamtmetallgehaltes beträgt. Die Erfindung wird durch die Merkmale der Unteransprüche weitergebildet.

Als besonders vorteilhaft hat sich ein Zusatz von 0,6 Gew.% Mangan, in Bezug auf den gesamten Metallgehalt erwiesen. Dadurch kann nicht nur die Schwärzung vermieden, sondern auch die Korrosionsbeständigkeit des Belages, z.B. gegenüber Fingerabdrücken wesentlich erhöht werden.

Ein weiterer Vorteil dieser Wismutoxid-Mangan-Legierung ist, daß sie sich mit konventioneller Dioden-Kathodenzerstäubung reaktiv zerstäuben läßt, wobei sich die Zerstäubungsrate kaum von der reinen Wismutoxids unterscheidet. Das gesamte Wismutoxid-Silber-Wismutoxid-Mehrschichtensystem kann daher wirtschaftlich mit konventioneller Kathodenzerstäubung niedergeschlagen werden.

Es ist weiter von Vorteil, wenn dieser Wismut-Mangan-Legierung ein dreiwertiges Metall, beispielsweise auf der Basis von Eisen, Chrom, Lanthan, Cer oder Indium, beigemischt ist, so daß sich zwischen dem Mangan und dem dreiwertigen Metall eine Spinell-Konfiguration bildet. Auf diese Weise wird bei Überoxidation der Wismutoxidschicht, z.B. bei zu hohem Sauerstoffpartialdruck während des Zerstäubungsvorgangs, eine Sauerstoffabgabe und damit eine Schwärzung der Schicht vermieden.

Laboruntersuchungen ergaben, daß die Schwärzung des Wismutoxid-Silber-Wismutoxid-Mehrschichtensystems bei UV-Bestrahlung auf Oxidation des Silbers beruht. Es zeigt sich nämlich, daß bei kurzzeitiger Temperung einer geschwärzten Schicht bei 250°C die Schwärzung verschwindet. Bekanntlich ist Silberoxid oberhalb 250°C nicht beständig.

Durch den erfindungsgemäßen Zusatz eines Stoffes der Gruppe Indium, Eisen, Nickel, Zink, Mangan, Magnesium, Titan, Kadmium und Zirkon, z.B. Mangan, kann die Sauerstoffabspaltung des Wismutoxids und damit die Aufoxidation des Silbers bei UV-Bestrahlung verhindert werden. Bei zu hohem Sauerstoffangebot gelangt jedoch das Mangan in hohe Wertigkeitsstufen, die wiederum leicht Sauerstoff, z.B. bei UV-Bestrahlung, abspalten. Diese hohen Wertigkeitsstufen können jedoch, wie das an sich bekannt ist, durch geeignete Spinell-Konfigurationen verhindert werden.

Bei der Herstellung des wärmedämmenden Belages gemäß der Erfindung wird zunächst unmittelbar auf das transparente Substrat, z.B. eine Glasscheibe oder eine Kunststofffolie, eine Wismutoxidschicht (mit der Beimischung) aufgebracht. Darüber wird eine Silberschicht gelegt, die wiederum mit einer Wismutoxidschicht (mit der Beimischung) als oberster Schicht abgedeckt wird. Dem Wismutoxid der ersten und der letzten Schicht sind dabei zuvor die oben erwähnten Stoffe (Metalle), die unedler als Wismut oder Wismutoxid sind, z.B. Mangan, beigemischt worden, wobei gegebenenfalls außerdem zur Festigung niedriger Wertigkeitsstufen des Mangans dreiwertige Metalle, z.B. Eisen, Chrom, Lanthan, Cer oder Indium zugesetzt worden sind. Durch solche Wismutoxidlegierungen wird die Schwärzung bei UV-Bestrahlung wirksam vermieden, wobei die Zerstäubungsrate bei konventioneller Dioden-Kathodenzerstäubung in etwa die gleiche ist, wie bei reinem Wismutoxid. Als weiter vorteilhaft hat sich erwiesen, daß die Korrosionsanfälligkeit eines solchen Mehrschichtensystems wesentlich geringer ist als bei einem Mehrschichtensystem mit reinem Wismutoxid. Die erwünschte vorteilhafte Randentfernung durch Flammreduktion ist jedoch wie bei dem Mehrschichtensystem mit reinem Wismutoxid weiterhin gewährleistet.

Als Substrate kommen für den erfindungsgemäßen wärmedämmenden Belag nicht nur Glasscheiben in Betracht, sondern beispielsweise auch transparente Folien, wie Kunststofffolien. Derartige Kunststofffolien können, mit dem wärmedämmenden Belag versehen, in dem Zwischenraum einer Isolierglasscheibe angeordnet sein oder auch auf eine der Isolierglasscheiben aufgeklebt sein. Der wärmedämmende Belag führt in beiden Fällen zu einer Verbesserung der Wärmedämmung einer solchen Isolierglasscheibe.

Im folgenden wird die Erfindung anhand des in den Figuren dargestellten Ausführungsbeispiels beschrieben und näher erläutert.

Es zeigen:

Fig. 1 schematisch einen Querschnitt durch eine Glasscheibe mit dem erfindungsgemäßen wärmedämmenden Belag,

Fig. 2 eine Doppel-Isolierverglasung mit einer den wärmedämmenden Belag tragenden Scheibe,

Fig. 3 eine Doppel-Isolierverglasung mit einer den wärmedämmenden Belag tragenden Kunststofffolie, die zwischen den Scheiben aufgespannt ist.

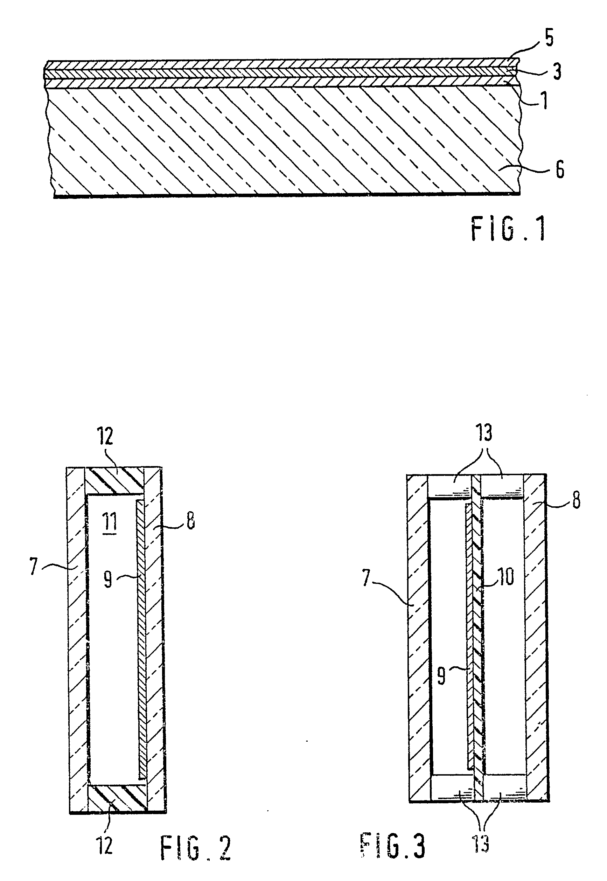

Die Fig. 1 zeigt einen schematischen Querschnitt durch eine Glasscheibe 6, auf der der erfindungsgemäße hochtransparente und in Durch- sowie in Außenansicht neutrale, wärmedämmende Belag aufgebracht ist. Unmittelbar auf dem durch die Glasscheibe 6 gebildeten transparenten Substrat befindet sich eine erste Schicht 1 aus Wismutoxid ($Bi_2O_3$), dem erfindungsgemäß die aufgeführten unedleren Stoffe beigemischt sind. Diese erste Schicht 1 hat eine Dicke von etwa 30 nm. Auf die erste Schicht 1 folgt eine zweite Schicht 3 aus Silber, die eine Dicke von etwa 15 nm aufweist. Darüber ist eine dritte Schicht 5 aus wiederum Wismutoxid, der erfindungsgemäß die aufgeführten unedleren Stoffe beigemischt sind, mit einer Dicke von etwa 25 nm gelegt.

Der dargestellte erfindungsgemäße Belag 9 zeigte keine Schwärzung selbst bei einer sechswöchigen UV-Bestrahlung. Außerdem ist der Belag 9 thermisch stabil, d.h., nach einer sechswöchigen Temperung bei 100 °C konnten keine Veränderungen festgestellt werden. Das Mehrschichtensystem ist wesentlich geringer korrosionsanfällig als eines mit reinem Wismutoxid, jedoch läßt es sich von den Scheibenrändern durch Flammreduktion in einfacher Weise entfernen, so daß eine mit dem erfindungsgemäßen wärmedämmenden Belag 9 versehene Glasscheibe 6 einfach zu verarbeiten ist.

Die Lichttransmission des Mehrschichtensystems in Verbindung mit einer 4 mm dicken Floatglasscheibe liegt bei etwa 80%. Ohne den aufgebrachten wärmedämmenden Belag 9 hat die Floatglasscheibe eine Lichttransmission von etwa 90%. Das Emissionsvermögen des wärmedämmenden Belags liegt bei 0,1, das von Glasoberflächen liegt dagegen bei 0,85.

Der erfindungsgemäße wärmedämmende Belag 9 wird dadurch hergestellt, daß die einzelnen Schichten 1, 3, 5 nacheinander durch konventionelle Dioden-Kathoden-Zerstäubung auf dem Substrat aus Glas oder Kunststoff niedergeschlagen werden, wobei die erste und die dritte Schicht 1 bzw. 5, d.h. die Oxidschichten in der gleichen reaktiven Atmosphäre, z.B. in einem Argon-Sauerstoff-Gemisch, und die zweite, d.h. die Silberschicht 3, in einer gegebenenfalls anderen reaktiven Atmosphäre, wie einer Argon-Atmosphäre, aufgebracht werden.

Fig. 2 zeigt schematisch einen Querschnitt durch eine Isolierglasscheibe bzw. -verglasung, bei der auf eine der beiden Scheiben 7, 8, zum Zwischenraum 11 weisend, der erfindungsgemäße wärmedämmende Belag 9 aufgebracht ist. Die Isolierscheibe besteht aus zwei parallel zueinander angeordneten Glasscheiben 7, 8, die am Scheibenrand durch Verklebung (Klebstoffmasse 12) oder Verlötung luftdicht verschlossen sind, wobei ein hier nicht dargestellter Abstandshalter, der die beiden Scheiben 7, 8 auf dem vorgegebenen Abstand hält, vorgesehen sein kann. Der erfindungsgemäße wärmedämmende Belag 9 vermindert den Wärmefluß zwischen den beiden Scheiben 7, 8 durch Reduktion des Strahlungsaustausches infolge des niedrigen Emissionsvermögens des Belags 9. Wegen der hohen Transparenz für Sonnenstrahlen hat die mit einem erfindungsgemäßen Belag versehene Scheibe somit Sonnenkollektorwirkung.

Fig. 3 zeigt eine Ausführungsform, bei der der wärmedämmende Belag 9 auf eine Kunststoffolie 10 aufgebracht ist. Die Kunststoffolie 10 ist zwischen den beiden Scheiben 7, 8 aufgespannt und in einem nur schematisch dargestellten Abstandshalter 13 verklemmt.

**Patentansprüche**

1. Hochtransparenter, in Durch- als auch Außenansicht neutral wirkender und wärmedämmender Belag (9) für ein Substrat (6) aus transparentem Material, wie Glasscheiben und Kunststoffolien, wobei der Belag (9) aus einem Wismutoxid-Silber-Wismutoxid-Mehrschichtensystem aufgebaut ist, dadurch gekennzeichnet, daß den Wismutoxidschichten (1, 5) mindestens ein Stoff mit höherem Normalpotential zur Vermeidung der Schwärzung bei UV-Bestrahlung beigemischt ist, der aus der Gruppe Indium, Eisen, Nickel, Zink, Mangan, Magnesium, Titan, Kadmium und Zirkon ausgewählt ist und dessen Anteil von 0,2 bis 10 Gew.% des Gesamtmetallgehaltes beträgt.

2. Belag nach Anspruch 1, dadurch gekennzeichnet, daß die Beimischung aus Mangan mit einem Anteil von 0,6 Gew.% des Gesamtmetallgehaltes besteht.

3. Belag nach den Ansprüchen 1 und 2, dadurch gekennzeichnet, daß neben dem Mangan zusätzlich dreiwertige Stoffe, wie Eisen, Lanthan, Chrom, Cer oder Indium in einer solchen Menge beigemischt sind, daß sich zwischen ihnen eine Spinell-Konfiguration bildet zum Verhindern der Aufoxidation des Mangans in höhere Wertigkeitsstufen.

4. Belag nach einem der Ansprüche 1 bis 3, dadurch gekennzeichnet, daß die an die Glasscheibe (6) angrenzende Wismutoxidschicht (1) eine Dicke von etwa 15 bis 40 nm, insbesondere etwa 30 nm hat.

5. Belag nach einem der Ansprüche 1 bis 4, dadurch gekennzeichnet, daß die zweite Schicht (3) aus Silber eine Dicke von etwa 10 bis 200 nm, insbesondere etwa 16 nm hat.

6. Belag nach einem der Ansprüche 1 bis 5, dadurch gekennzeichnet, daß die dritte Schicht (5) aus Wismutoxid eine Dicke von etwa 10 bis 40 nm, insbesondere etwa 25 nm hat.

7. Verfahren zur Herstellung eines Belages nach einem der Ansprüche 1 bis 6, dadurch gekennzeichnet, daß jede der einzelnen Schichten durch konventionelle Dioden-Zerstäubung nacheinander aufgebracht wird.

8. Sonnen- und Wärmeschutz-Isolierscheibe mit zwei im Abstand parallel zueinander angeordneten Scheiben (7, 8) und einem Belag (9) nach einem der Ansprüche 1 bis 6, dadurch gekennzeichnet, daß der Belag (9) auf einer der beiden Seiten (7, 8) zum Scheibenzwischenraum (11) weisend angeordnet ist.

9. Sonnen- und Wärmeschutz-Isolierscheibe mit zwei im Abstand parallel zueinander angeordneten Scheiben (7, 8) und einem Belag (9) nach einem der Ansprüche 1 bis 6, dadurch gekennzeichnet, daß der wärmedämmende Belag (9) auf einer transparenten Folie (10) aufgebracht ist und daß die Folie (10) mit einem wärmedämmenden Belag (9) zwischen den Glasscheiben (7, 8) angeordnet ist.

10. Sonnen- und Wärmeschutz-Isolierscheibe nach Anspruch 9, dadurch gekennzeichnet, daß die transparente Folie (10) auf einer der Glasscheiben (7, 8) aufgeklebt ist.

11. Sonnen- und Wärmeschutz-Isolierscheibe nach Anspruch 9, dadurch gekennzeichnet, daß die transparente Folie (10) mit dem auf ihr befindlichen wärmeisolierenden Belag (9) in dem Zwischenraum (11) zwischen den Scheiben (7, 8) aufgespannt ist.

## Claims

1. A supertransparent heat-insulating coating (9), neutral both in transparency and in external appearance, for a substrate (6) of transparent material such as glass panes and plastics sheets or foils, the coating (9) being formed of a bismuth oxide-silver-bismuth oxide multilayer system, characterised in that the bismuth oxide layers (1, 5) have mixed with them, to avoid blackening by UV radiation, at least one substance with a high standard electrode potential that is selected from the group consisting of indium, iron, nickel, zinc, manganese, magnesium, titanium, cadmium and zirconium, and is present in an amount of from 0.2 to 10% by weight of the total metal content.

2. A coating according to claim 1, characterised in that the addition consists of manganese in an amount of 0.6% by weight of the total metal content.

3. A coating according to claim 1 or claim 2, characterised in that besides the manganese additional trivalent substances, such as iron, lanthanum, chromium, cerium or indium are added in an amount such that a spinel configuration is formed between them to prevent autoxidation of the manganese to higher valency states.

4. A coating according to any one of claims 1 to 3, characterised in that the bismuth oxide layer (1) next to the glass pane (6) has a thickness of about 15 to 40 nm, in particular about 30 nm.

5. A coating according to any one of claims 1 to 4, characterised in that the second layer (3) of silver has a thickness of about 10 to 200 nm, in particular about 16 nm.

6. A coating according to any one of claims 1 to 5, characterised in that the third layer (5) of bismuth oxide has a thickness of about 10 to 40 nm, in particular about 25 nm.

7. A process for producing a coating according to any one of claims 1 to 6, characterised in that each of the individual layers is successively applied by conventional diode sputtering.

8. A sun- and heat-protective insulating pane comprising two panes (7, 8) spaced apart and parallel to one another and a coating (9) according to any one of claims 1 to 6, characterised in that the coating (9) is on one of the two sides facing towards the gap (11) between the panes.

9. A sun- and heat-protective insulating pane comprising two panes (7, 8) spaced apart and parallel to one another and a coating (9) according to any one of claims 1 to 6, characterised in that the heat-insulating coating (9) is applied to a transparent sheet or foil (10) and that the foil (10) with a heat-insulating coating (9) is situated between the glass panes (7, 8).

10. A sun- and heat-protective insulating pane according to claim 9, characterised in that the transparent sheet or foil (10) is stuck to one of the glass panes (7, 8).

11. A sun- and heat-protective insulating pane according to claim 10, characterised in that the transparent sheet or foil (10) with the heat-insulating coating (9) thereon is stretched in the gap (11) between the panes (7, 8).

## Revendications

1. Revêtement (9) thermiquement isolant et hautement transparent, sans influence sur l'aspect intérieur ou en vue par transparence pour un substrat (6), tel que des vitres et des feuilles de matière plastique, le revêtement (9) étant constitué d'un système multicouches d'oxyde de bismuth/argent/oxyde de bismuth, caractérisé en ce qu'on mélange aux couches d'oxyde de bismuth (1, 5), pour éviter le noircissement lors de l'irradiation UV, au moins une substance ayant un potentiel normal plus élevé, choisie dans le groupe indium, fer, nickel, zinc, manganèse, titane, cadmium et zirconium, et dont la proportion constitue 0,2% à 10% en poids du contenu métallique total.

2. Revêtement selon la revendication 1, caractérisé en ce que l'incorporation de manganèse représente 0,6% en poids du contenu métallique total.

3. Revêtement selon les revendications 1 et 2, caractérisé en ce qu'on incorpore, en plus du manganèse, des éléments trivalents supplémentaires tels que fer, lanthane, chrome, cérium ou indium en quantité telle qu'il se forme entre eux une configuration de spinelle, pour empêcher le manganèse d'être oxydé en passant à des niveaux de valence supérieurs.

4. Revêtement selon une des revendications 1 à 3, caractérisé en ce que la couche d'oxyde de bismuth (1) contiguë à la vitre (6) a une épaisseur d'environ 15 à 40 nm, en particulier d'environ 30 nm.

5. Revêtement selon une des revendications 1 à 4, caractérisé en ce que la deuxième couche (3) en argent a une épaisseur d'environ 10 à 200 nm, en particulier d'environ 16 nm.

6. Revêtement selon une des revendications 1 à 5, caractérisé en ce que la troisième couche (5) en oxyde de bismuth a une épaisseur d'environ 10 à 40 nm, en particulier d'environ 25 nm.

7. Procédé de fabrication d'un revêtement selon une des revendications 1 à 6, caractérisé en ce que les diverses couches sont déposées chacune l'une après l'autre par pulvérisation classique au moyen de diodes.

8. Vitre isolante contre le soleil et la chaleur, avec deux vitres (7, 8) disposées en étant écartées l'une de l'autre et parallèles l'une à l'autre, avec un revêtement (9) selon une des revendications 1 à 6, caractérisé en ce que le revêtement (9) est placé sur un des deux côtés en étant orienté vers l'espace intermédiaire (11) entre les deux vitres.

9. Vitre isolante contre le soleil et la chaleur, avec deux vitres (7, 8) disposées en étant écartées l'une de l'autre et parallèles l'une à l'autre, avec un revêtement (9) selon l'une des revendications 1 à 6, caractérisé en ce que le revêtement (9) thermiquement isolant est déposé sur une feuille transparente (10) et en ce que la feuille (10) avec un revêtement (9) thermiquement isolant est disposée entre les vitres (7, 8).

10. Vitre isolante contre le soleil et la chaleur selon la revendication 9, caractérisée en ce que la feuille transparente (10) est collée sur une des vitres (7, 8).

11. Vitre isolante contre le soleil et la chaleur selon la revendication 9, caractérisée en ce que la feuille transparente (10) avec le revêtement (9) thermiquement isolant se trouvant sur elle est tendue dans l'espace intermédiaire (11) entre les vitres (7, 8).

FIG.1

FIG.2

FIG.3